# FASCICULE DE BREVET EUROPEEN

(11) **EP 2 182 244 B1**
(45) Date de publication et mention de la délivrance du brevet: **17.08.2011**
(21) Numéro de dépôt: 09174731.1
(22) Date de dépôt: 02.11.2009
(51) Int. Cl.: F16H 1/28, E06B 9/56

(54) **Actionneur pour écran domotique et installation de fermeture ou de protection solaire comprenant un tel actionneur**
Stellglied für Heimbildschirm und Schliess-/ oder Sonnenschutzanlage, die ein solches Stellglied umfasst.
Actuator for a home automation screen and locking installation or sun protection installation comprising such an actuator.

(30) Priorité: 03.11.2008 FR 0857458
(43) Date de publication de la demande: 05.05.2010
(73) Titulaire: Somfy SAS, 74300 Cluses (FR)
(72) Inventeur: Lagarde, Eric, 74700, Sallanches (FR)
(74) Mandataire: Myon, Gérard Jean-Pierre

(56) Documents cités:
- EP-A- 0 863 331
- FR-A- 2 506 880
- FR-A- 2 742 834
- US-A- 5 181 433
- US-A- 6 117 036
- US-A1- 2006 205 557

## Description

La présente invention concerne un actionneur d'un écran domotique tel qu'un volet roulant, un store vénitien intérieur ou extérieur, un store toile ou autre écran analogue comprenant un réducteur planétaire. Un tel réducteur planétaire comprend au moins un étage de réduction, à savoir un train planétaire simple, permettant d'augmenter le couple transmis tout en réduisant la vitesse de rotation de l'entrée de l'étage. L'invention concerne également une installation de fermeture ou de protection solaire comprenant un tel actionneur.

### Etat de la technique :

Pour réduire le niveau sonore de tels actionneurs, une solution consiste à remplacer les dentures droites des étages d'un réducteur planétaire faisant partie de l'actionneur par des dentures obliques. Cette diminution sonore est d'autant plus efficace que la substitution concerne les dentures tournant vite, c'est-à-dire, les premiers étages du réducteur.

Ainsi, le brevet EP-B-0 863 331 décrit un premier type de train planétaire simple, dit train de type 1. Ce train présente, une spécificité en ce qu'il comprend des dentures obliques opposées, appelées également dentures à chevrons. Les deux dentures obliques ont le même angle d'hélice et sont symétriques par rapport à un plan médian séparant les deux dentures. Cette symétrie se traduit par le fait que l'indexation angulaire des dents d'une première denture oblique est la même que l'indexation angulaire des dents de la deuxième denture oblique opposée. Autrement dit, lorsque les dentures obliques sont synchronisées, une dent de la première denture oblique commence à engrener la dent d'une denture oblique complémentaire, ces deux dentures formant un premier jeu, en même temps qu'une dent de la deuxième denture oblique commence à engrener la dent d'une autre denture oblique complémentaire, ces deux dentures formant le deuxième jeu. En conséquence, le nombre de dents en prise d'un premier jeu de dentures obliques est toujours identique au nombre de dents en prise du deuxième jeu de dentures obliques. Les efforts exercés sur les dents en prises dépendent directement du nombre de dents en prise. Lorsque les dentures sont synchronisées, le nombre de dents en prise alterne entre deux valeurs limites selon une fréquence régulière relativement faible. Les valeurs limites se déduisent du rapport de conduite de l'engrènement. L'écart entre deux valeurs limites est de deux dents en prises quand les dentures sont symétriques. Ces sauts réguliers de deux dents constituent des sources de bruit. De plus, quand le nombre de dents en prise correspond à la valeur limite basse, les engrenages sont le plus sollicités, en statique ou en dynamique. En effet, le changement direct du nombre de dents en prise entraîne une forte variation des efforts exercés sur les dents, qui s'apparente à un choc. Par ailleurs, même si les satellites proposés sont indépendants et faciles à réaliser, ce train planétaire présente des inconvénients. Chaque denture oblique doit engrener avec une denture intérieure oblique complémentaire d'une couronne fixe. Il faut donc deux couronnes indépendantes, ce qui est coûteux. De plus, l'assemblage des satellites dans chaque couronne est délicat car il nécessite un mouvement hélicoïdal, c'est-à-dire, une translation axiale combinée avec une rotation. Ainsi, même si les pièces constitutives du réducteur sont relativement simples à réaliser, l'étage du réducteur reste difficile à assembler.

Le brevet US-B-7,291,088 décrit un deuxième type de train planétaire simple, dit train de type Il utilisé dans un multiplicateur pour générateur d'éolienne. La vitesse de rotation de l'arbre de sortie est plus rapide que celle de l'arbre d'entrée. Ce train comprend une couronne munie d'une denture intérieure droite et constituant l'arbre d'entrée. Cette couronne engrène avec une première denture droite d'un des satellites constituant l'étage du générateur. Le satellite comprend également deux dentures obliques opposés, dites dentures à chevrons, engrenant avec les dentures obliques complémentaires de l'arbre de sortie du train planétaire. Le satellite est monté dans un porte-satellites fixe par rapport au bâti. Les dentures obliques de l'arbre de sortie sont fixes l'une par rapport à l'autre. Elles ont le même angle d'hélice et la même indexation angulaire. Le satellite dispose de moyens de réglage pour ajuster la position axiale et angulaire d'une denture oblique par rapport à l'autre de manière à pouvoir engrener correctement avec les dentures obliques de l'arbre de sortie. Après réglage, les dentures obliques du satellite ont sensiblement la même indexation angulaire. Cette symétrie ou synchronisation présente les mêmes inconvénients sonores que ceux exposés précédemment. En outre, la structure proposée avec porte-satellites fixe et couronne mobile, semble adaptée pour les générateurs éoliens mais inintéressante pour des moteurs tubulaires à usage domotique pour des raisons d'encombrement et de dimensionnement. Pour un encombrement égal, cette structure permet une réduction moins importante qu'une version à portes-satellites mobiles.

Dans un train planétaire de type I, le ou chaque satellite engrène simultanément avec le solaire et la couronne, alors que, dans un train planétaire de type II, le satellite comprend deux dentures distinctes, une première engrenant avec le solaire et une seconde engrenant avec la couronne. Ces deux types de trains planétaires simples sont décrits dans le chapitre 13.1, p. 497-501, dans l'ouvrage de G. Henriot intitulé « Engrenages, conception, fabrication, mise en oeuvre », édition DUNOD, 7e édition.

Le document FR2742834 représente l'état de la technique le plus proche

### Exposé de l'invention :

L'invention propose un actionneur doté d'un réducteur planétaire composé d'un train planétaire qui forme un étage de réduction et dans lequel les bruits de fonctionnement sont réduits par rapport aux matériels de l'art antérieur.

A cet effet, l'invention concerne un actionneur d'un écran domotique comprenant un moteur électrique couplé à un réducteur équipé d'au moins un train planétaire et comprenant une couronne, un arbre d'entrée équipé de deux dentures obliques opposées ayant le même angle d'hélice, au moins un satellite équipé de deux dentures obliques opposées engrenant avec les deux dentures obliques de l'arbre d'entrée, et un porte-satellites portant le satellite. Cet actionneur est caractérisé en ce que l'une des dentures obliques du satellite est décalée angulairement par rapport à l'autre denture oblique opposée d'un angle fixe dont la valeur est comprise entre 0,25 et 0,75 fois la valeur du pas angulaire des dentures, alors que l'une des dentures obliques de l'arbre d'entrée est décalée angulairement par rapport à l'autre denture oblique de cet arbre d'un angle fixe ayant la même valeur que l'angle de décalage entre les dentures du satellite, et en ce que le ou chaque satellite comprend en outre une denture extérieure droite, solidaire en rotation avec les dentures obliques et qui engrène avec une denture intérieure droite de la couronne.

Une denture oblique est une denture de type hélicoïdal. Une denture oblique est opposée à une autre denture oblique lorsque son angle d'hélice a la même valeur que l'autre mais son hélice est en sens contraire, de sorte qu'elle tourne dans le sens opposée. Les dentures obliques sont généralement de même largeur afin d'équilibrer les efforts axiaux transmis. L'association d'une denture oblique et d'une denture oblique opposée forme ce qu'on appelle une denture à chevrons.

Le pas angulaire d'une denture correspond à l'angle, par rapport à l'axe principal de la denture, entre deux dents consécutives de la denture. Le décalage angulaire entre deux dentures obliques opposées signifie que ces deux dentures n'ont pas la même indexation angulaire. Si les deux dentures obliques ont la même indexation, ces dentures sont symétriques par rapport à un plan médian perpendiculaire à l'axe principal des dentures, ce plan étant équidistant des deux dentures.

Le décalage, l'une par rapport à l'autre, des dentures obliques opposées des dentures des satellites et de l'arbre d'entrée permet d'améliorer les performances sonores du réducteur. En effet, cette dissymétrie évite d'avoir des sauts d'engrènement important, de tels sauts constituant des sources de bruit. En fonctionnement, le nombre total de dents en prise, en considérant les deux dentures obliques, varie d'une dent au lieu de deux pour des dentures synchronisées. Cette différence d'amplitude permet de diminuer le niveau sonore de l'actionneur et de mieux répartir les efforts exercés sur les dentures. Celles-ci sont ainsi moins sollicitées en statique et en dynamique. En effet, même si la fréquence des variations d'amplitude est plus élevée à savoir deux fois plus de sauts, leur amplitude est moins forte, à savoir une dent au lieu de deux, ce qui permet de réduire les contraintes dans les dents en prise et donc la pulsation de couple. Cette configuration atténue également les chocs dus aux sauts répétés mais augmente leurs fréquences. Avec un décalage d'un demi-pas angulaire, l'engrènement est plus régulier.

Comme les deux dentures obliques opposées de chaque satellite engrènent avec l'arbre d'entrée qui constitue le solaire du réducteur alors que sa denture droite engrène avec la couronne, le réducteur de l'actionneur de l'invention est du type II identifié ci-dessus.

Selon des aspects avantageux mais non obligatoires de l'invention, un actionneur conforme à l'invention peut incorporer une ou plusieurs des caractéristiques suivantes, prises dans toute combinaison techniquement admissible :
- Les dentures obliques du ou de chaque satellite, d'une part, et la denture extérieure droite du satellite, d'autre part, sont décalées axialement le long d'un axe central du satellite. L'utilisation d'un satellite avec deux parties décalées axialement, comprenant respectivement les dentures obliques opposées et la denture droite, facilite le montage du train planétaire. La première partie comprenant les dentures obliques à chevrons peut facilement s'engrener, par simple translation radiale, avec les dentures obliques du solaire préalablement inséré dans le porte-satellites. La seconde partie comprenant la denture droite s'engrène également facilement, par simple translation axiale, avec la denture intérieure de la couronne ;
- Les dentures obliques et la denture droite du ou de chaque satellite sont ménagées sur une pièce monobloc. La réalisation du satellite en une seule pièce simplifie le train planétaire qui devient plus économique et simple à assembler.
- L'angle de décalage des dentures obliques a une valeur égale à 0,5 fois la valeur du pas angulaire de ces dentures.
- Le train planétaire comprend au moins trois satellites.
- Le porte-satellites est couplé avec un arbre de sortie du train planétaire.
- La couronne est fixe par rapport à un carter de l'actionneur.
- L'actionneur est tubulaire alors que le moteur électrique est inséré à l'intérieur d'un boîtier tubulaire

L'invention concerne également une installation de fermeture ou de protection solaire comprenant un actionneur tel que décrit ci-dessus. Une telle installation est plus confortable à l'usage, dans la mesure où son actionneur est moins bruyant que ceux de l'état de la technique.

### Description des dessins :

L'invention sera mieux comprise à la lecture de la description qui va suivre, donnée uniquement à titre d'exemple et faite en se référant aux dessins annexés sur lesquels :
- la figure 1 est une coupe axiale partielle de principe d'un actionneur conforme à l'invention, en place dans une installation de fermeture conforme à l'invention ;
- la figure 2 est une vue en perspective d'un porte-satellites équipé de ses satellites et appartenant à l'actionneur de la figure 1 ;
- la figure 3 est une vue de dessus d'un des satellites du porte-satellites de la figure 2 ;
- la figure 4 est une coupe du satellite selon la ligne I-I à la figure 3 ;
- la figure 5 est une coupe du satellite selon la ligne H-H à la figure 3 ;
- la figure 6 est une vue à plus grande échelle du détail VI à la figure 5;
- la figure 7 est un graphe représentant, en fonction du temps, le nombre de dents en prise de deux dentures à chevrons synchronisées dans un actionneur selon l'art antérieur ;
- la figure 8 est un graphe représentant, en fonction du temps, le nombre de dents en prise de deux dentures à chevrons décalées d'un demi pas angulaire dans l'actionneur des figures 1 à 6 ; et
- la figure 9 est une vue éclatée illustrant l'assemblage du train planétaire de l'actionneur des figures 1 à 6.

### Description des modes de réalisation :

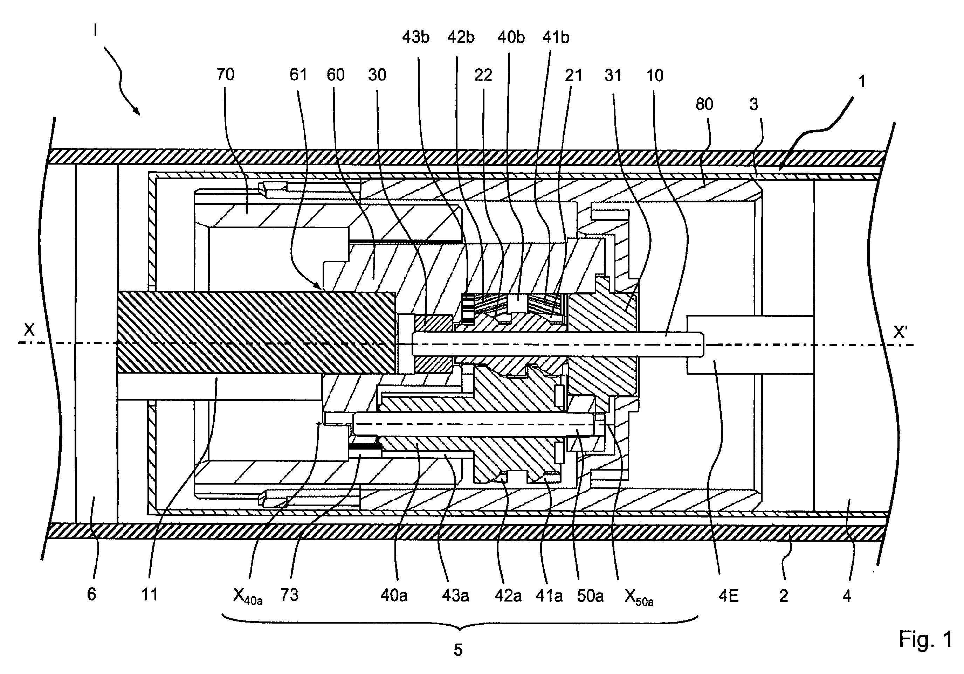

Dans l'installation de fermeture 1 représentée à la figure 1, un actionneur tubulaire 1 selon l'invention est destiné à entraîner en rotation, autour d'un axe longitudinal et horizontal X-X', un tube d'enroulement 2 autour duquel s'enroule un écran non représenté. L'actionneur comprend un boîtier tubulaire 3 à l'intérieur duquel sont insérés un moteur électrique 4, un réducteur 5 et un dispositif non représenté de contrôle de l'alimentation du moteur. L'actionneur 1 peut également comprendre un frein qui n'est pas représenté. Une roue d'entraînement 6, fixe en rotation par rapport au tube d'enroulement 2, est elle-même entraînée par l'arbre de sortie 11 de l'actionneur 1.

Pour l'application visée, à savoir, les volets roulants, stores ou autres écrans analogues, le réducteur 5 réduit la vitesse de l'arbre de sortie 4E du moteur et augmente le couple transmis à la roue 6. Pour cela, il est connu d'utiliser un réducteur comprenant plusieurs étages de réduction. Une structure adaptée comprend, par exemple, trois trains planétaires simples. Pour la clarté du dessin, le réducteur 5 est représenté avec un seul train planétaire simple formant un étage de réduction, étant précisé ici que d'autres étages de réduction peuvent être intercalés entre l'étage représenté et l'arbre de sortie 11 de l'actionneur 1. Un train planétaire comprend généralement un solaire, au moins un satellite engrenant avec le solaire et souvent une couronne, à l'intérieur de laquelle s'engrène le ou les satellites.

Compte tenu des contraintes de conception, c'est-à-dire l'objectif d'obtenir un réducteur 5 compact facile à monter à l'intérieur du boîtier tubulaire 3 dont le diamètre intérieur est réduit, il est préférable de bloquer en rotation la couronne de chaque étage de réducteur. Ainsi, le réducteur 5 équipé de son ou ses étages peut former un sous-ensemble unitaire, facile à manipuler, à assembler au moteur 4 ou à échanger en cas de réparation.

L'invention concerne plus particulièrement la structure d'au moins un des trains planétaires simples du réducteur 5. Compte tenu que cette structure permet de réduire le bruit généré par les engrenages, elle est préconisée pour les étages dont les satellites tournent à grande vitesse, à savoir, les premiers étages. Il est ainsi proposé un train planétaire simple, du type II identifié ci-dessus, dont le ou les satellites comprennent une denture droite, engrenant avec une couronne 70 fixe par rapport au boîtier tubulaire 3, et deux dentures obliques opposées et décalées engrenant avec le solaire d'entrée de l'étage.

Les figures 1, 2 et 9 illustrent un train planétaire simple 8 selon l'invention. Le solaire 9 du train 8 comprend un arbre 10 d'entrée du train qui entraîne en rotation deux dentures obliques 21 et 22 opposées et décalées. Les dentures doivent donc être solidaires en rotation avec l'arbre 10. Dans le mode de réalisation représenté, ces dentures à chevrons forment une seule pièce 20, solidaire de l'arbre 10 par coopération de formes. En variante, chaque denture oblique 21 et 22 forme une pièce indépendante. Alternativement, les dentures à chevrons sont surmoulées sur l'arbre.

On note X₈ l'axe central du train 8 autour duquel tournent ses parties mobiles. En configuration montée de l'installation 1, les axes X-X' et X₈ sont confondus. On note respectivement X₁₀ et X₂₀ les axes centraux des pièces 10 et 20, lesquels sont confondus avec l'axe X₈ en configuration montée du train 8.

Les dents des dentures 21 et 22 sont inclinées par rapport à l'axe X₂₀, avec le même angle d'hélice, mais en sens inverse l'une de l'autre.

L'arbre d'entrée 10 est guidé grâce à deux paliers 30 et 31 lisses logés dans un porte-satellites 60. Le palier 31 tourne dans un carter 80 monté dans le boîtier tubulaire 3.

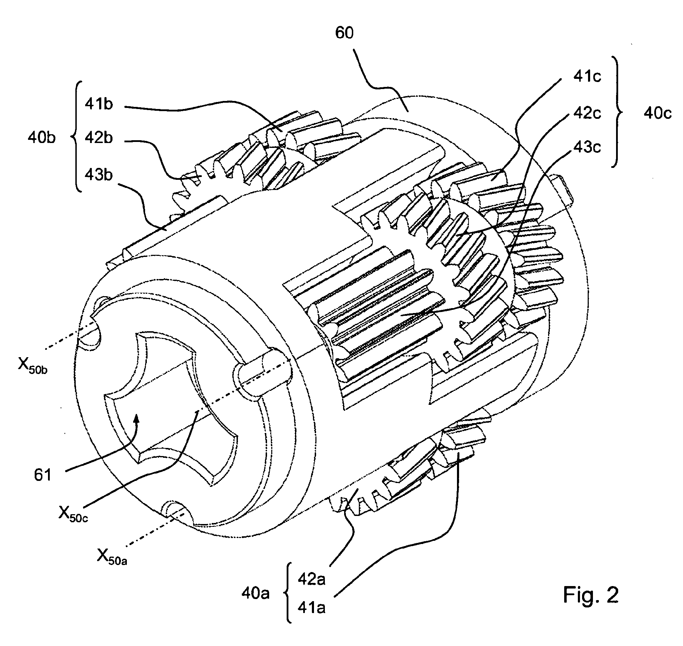

Les deux dentures obliques 21 et 22 du solaire 2 engrènent respectivement avec des dentures obliques complémentaires 41 a, 42a, 41 b, 42b, 41 c et 42c de trois satellites 40a, 40b et 40c montés sur le porte-satellite 60. Chaque satellite tourne autour d'un arbre 50a, 50b et 50c dont l'axe longitudinal est parallèle à l'axe X₈. A la figure 2, les arbres 50a, 50b et 50c sont représentés par leurs axes longitudinaux respectifs X₅₀, X_{50b} et X_{50c}. Chaque arbre traverse un satellite et est solidaire du porte-satellites 60.

Les dents des dentures 41 a et 42a sont inclinées, par rapport à l'axe X₅₀ₐ longitudinal de l'arbre 50a, avec le même angle d'hélice mais en sens inverse l'une de l'autre. II en est de même, d'une part, pour les dentures 41 b et 42b, par rapport à l'axe de l'arbre 50b, et, d'autre part, pour les dentures 41 c et 42c, par rapport à l'axe X_{50c} de l'arbre 50c. Les angles d'inclinaison des dentures 21, 22, 41 a, 41 b, 41 c, 42a, 42b et 42c par rapport aux axes correspondants ont la même valeur absolue.

Chaque satellite comprend en outre une denture droite extérieure 43a, 43b et 43c engrenant avec la denture intérieure droite 73 de la couronne 70. Le carter 80 et la couronne 70 sont fixes par rapport au boîtier tubulaire 3 dans lequel sont insérés les différents éléments de l'actionneur 1.

Lorsque le solaire 9 tourne, celui-ci entraîne en rotation les satellites 40a, 40b et 40c grâce aux dentures à chevrons 21 et 41 a à 41 c, d'une part, 22 et 42a à 42c, d'autre part, qui sont respectivement en prise.

Comme la couronne 70 est fixe dans le boîtier 3, les satellites entraînent en rotation le porte-satellites 60 grâce aux dentures droites 73 et 43a à 43c qui sont en prise. Le porte-satellites 60 constitue donc la sortie du train 8 et comprend, à cet effet, un logement 61 destiné à faire interface avec l'élément suivant l'étage. Dans l'exemple représenté, l'arbre 11 est directement mis en place dans le logement 61 et l'arbre 11 a une section externe à trois branches, correspondant à celle du logement 61, pour permettre une transmission de couple efficace entre les pièces 60 et 11.

Lorsqu'un deuxième train planétaire est prévu, dans le cas d'un réducteur à plusieurs étages, l'arbre d'entrée de ce deuxième train est engagé dans le logement 61. Alternativement, un frein est placé entre deux étages du réducteur. Dans ce cas, l'arbre d'entrée du frein est engagé dans le logement 61

Chaque satellite 40a, 40b, 40c est monobloc. Ainsi, les dentures 41 a, 42a et 43a du satellite 40a ont des positions fixes les unes par rapport aux autres. Il en va de même pour les dentures des deux autres satellites. Un satellite monobloc est économique et rapide à réaliser. En variante, les satellites peuvent être formés chacun de plusieurs pièces assemblées de façon à constituer un sous-ensemble rigide, sans possibilité de mouvement relatif entre elles.

Une spécificité du train 8 réside dans le décalage des dentures obliques opposées 41 a, 42a, 41 b, 42b, 42c, 43c les unes par rapport aux autres. Ce décalage ou « désynchronisation » permet de réduire le bruit de l'étage.

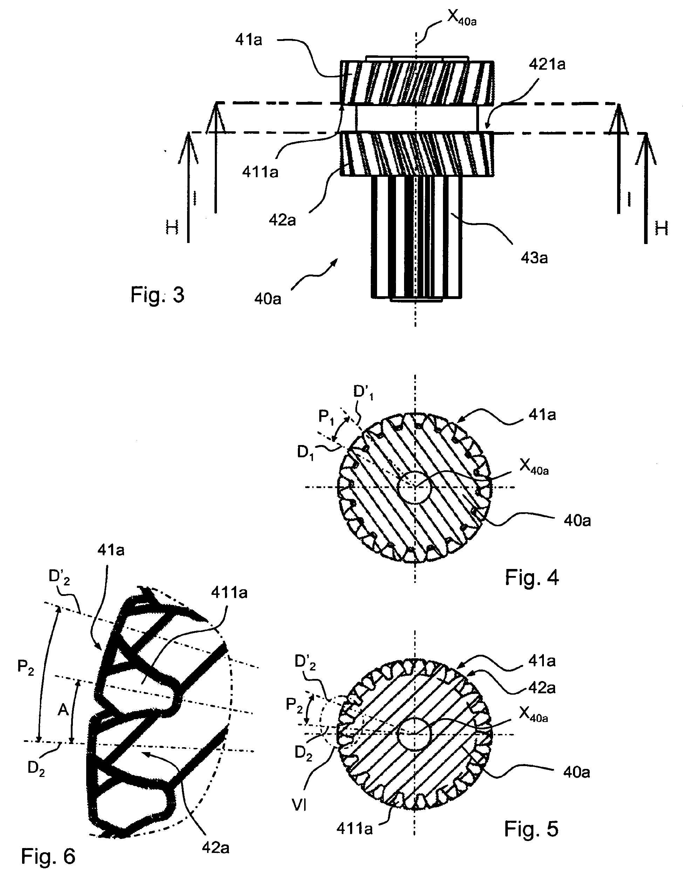

On note P₁ le pas angulaire de la denture 41 a. Ce pas est l'angle au sommet d'un dièdre défini, dans le plan de la figure 4, par deux droites D₁ et D'₁ passant par l'axe central X₄₀ₐ du satellite 40a et par le centre de deux dents adjacentes de la denture 41 a.

On note P₂ le pas angulaire de la denture 42a défini de la même façon, avec deux droites D₂ et D'₂. Les valeurs des angles P₁ et P₂ sont identiques, comme mentionné ci-dessus.

Comme il ressort plus particulièrement de la figure 6, les dentures 41a et 42a sont décalées angulairement l'une de l'autre, autour de l'axe X₄₀, d'un angle A dont la valeur est égale à la moitié de celle des angles P₁ et P₂.

En considérant les deux faces 411 a et 421 a formant respectivement la base de chaque denture hélicoïdale 41 a ou 42a, le décalage des dentures se traduit par une rotation angulaire d'un angle A des dents de la première denture oblique 41 a par rapport aux dents de la seconde denture oblique 42a, parallèlement aux faces 411 a et 421 a.

La figure 4 est une coupe au niveau de la base de la première denture hélicoïdale 41 a. La figure 5 est une coupe au niveau de la base de la deuxième denture hélicoïdale 42a. La face de base 411 a de la denture 41 a est également visible sur cette figure et sur la figure 6 et permet de visualiser le décalage angulaire A.

En pratique, la valeur de l'angle A peut être choisie entre un quart et trois quart de la valeur des angles P₁ et P₂.

Les dentures 41 b et 42b, d'une part, 41 c et 42c des satellites 40b et 40c ont également des pas angulaires P₁ et P₂, de même valeur que les pas des dentures 41 a et 42a, et sont également décalées, l'une par rapport à l'autre, de l'angle A.

Par ailleurs, les dentures 21 et 22 ont un pas angulaire de valeur égale à celle des angles P₁ et P₂. Ces dentures sont également décalées angulairement l'une par rapport à l'autre, autour de l'axe X₂₀, d'un angle A' dont la valeur est égale à celle de l'angle A.

Ainsi, le même décalage angulaire A est appliqué entre les deux dentures obliques du solaire 9 et les deux dentures obliques de chaque satellite 40a, 40b, 40c.

Le décalage angulaire A ou A', entre les dentures 41 a et 42a, 41 b et 42b, 41 c et 42c ou 21 et 22 est fixe dans la mesure où les dentures des satellites sont solidaires en rotation les unes par rapport aux autres, de même que les dentures du solaire 9. Ainsi, le décalage angulaire A ou A' est établi une fois pour toute lors de la fabrication du solaire 9 et des satellites 40a, 40b, 40c avant assemblage

Le sens de décalage angulaire entre les dentures 21 et 22, d'une part, et les dentures 41 a et 42a, d'autre part est sélectionné pour que les dentures 21 et 41 a soient en prise alors que les dentures 22 et 42a sont en prise. Le décalage angulaire entre les dentures obliques des trois satellites est dans le même sens.

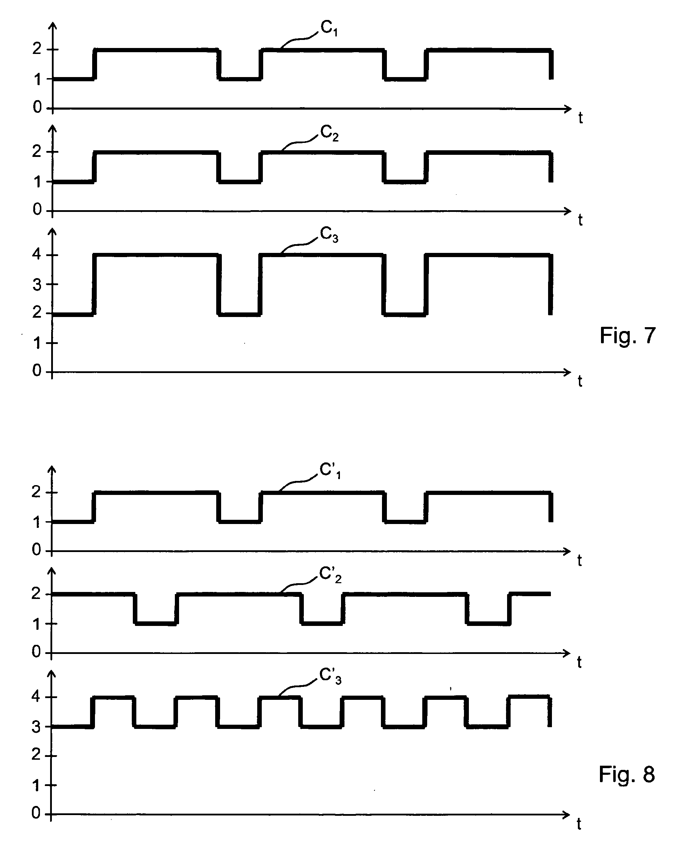

Les figures 7 et 8 illustrent la différence de fonctionnement entre un train planétaire avec des dentures à chevrons standard, c'est-à-dire des dentures obliques opposées et non décalées, (fig. 7) et un engrenage avec des dentures à chevrons décalées d'un demi pas angulaire (fig. 8). Pour cette illustration, le rapport de conduite considéré entre les deux dentures est supérieur à 1,5 et inférieur à 2. Le nombre de dents en prise pour chaque paire de dentures obliques varie donc entre 1 et 2. Lorsque l'on considère l'engrènement total, c'est-à-dire, en cumulant le nombre de dents en prise des deux jeux de dentures, on obtient des performances variant en fonction de la synchronisation des deux dentures.

A la figure 7, la courbe C₁ représente, en fonction du temps, le nombre de dents en prise entre deux dentures appartenant respectivement à un solaire et à un satellite. La courbe C₂ représente, en fonction du temps, le nombre de dents en prise entre deux autres dentures appartenant respectivement à un solaire et à un satellite. Comme les dentures ne sont pas décalées dans le cas de la figure 7, les nombres de dents en prise passent de un à deux, et réciproquement, en même temps sur ces deux courbes. La courbe C₃ représente le nombre cumulé de dents en prise avec les quatre dentures précitées. Sur cette courbe, qui est la somme des précédentes, le nombre de dents en prise passe régulièrement de deux à quatre.

En d'autres termes, lorsque les dentures obliques sont synchronisées, comme représenté à la figure 7 on observe, à intervalle régulier, un saut de deux dents en prise. Le nombre de dents en prise passe de quatre à deux et réciproquement.

Par contre, lorsque les dentures obliques sont décalées d'un demi pas angulaire, comme représenté à la figure 8, le saut n'est plus que d'une dent mais à une fréquence double par rapport au cas des dentures synchronisées. Dans ce cas, le nombre de dents en prise passe de quatre à trois et réciproquement. En effet, en définissant des courbes C'₁, C'₂ et C'₃ respectivement de la même manière que pour le cas de la figure 7, la courbe C'₃ oscille entre deux valeurs, à savoir trois et quatre.

L'écart entre ces valeurs est moins important que dans le cas de la figure 7, ce qui est bénéfique en terme de bruit.

Si la valeur de A est différente de la moitié de celle de P₁ et P₂, tout en étant comprise entre 0,25 et 0,75 fois cette valeur, les nombres de dents en prise varient également de une unité, avec toutefois une répartition temporelle différente de celle représentée par la courbe C'₃.

Bien entendu, cette analyse est transposable à des réducteurs ayant un rapport de conduite différent. Le nombre de dents en prise et/ou leur fréquence de concordance, à savoir le même nombre de dents en prise entre les deux jeux de dentures, varient en fonction du rapport de conduite des dentures.

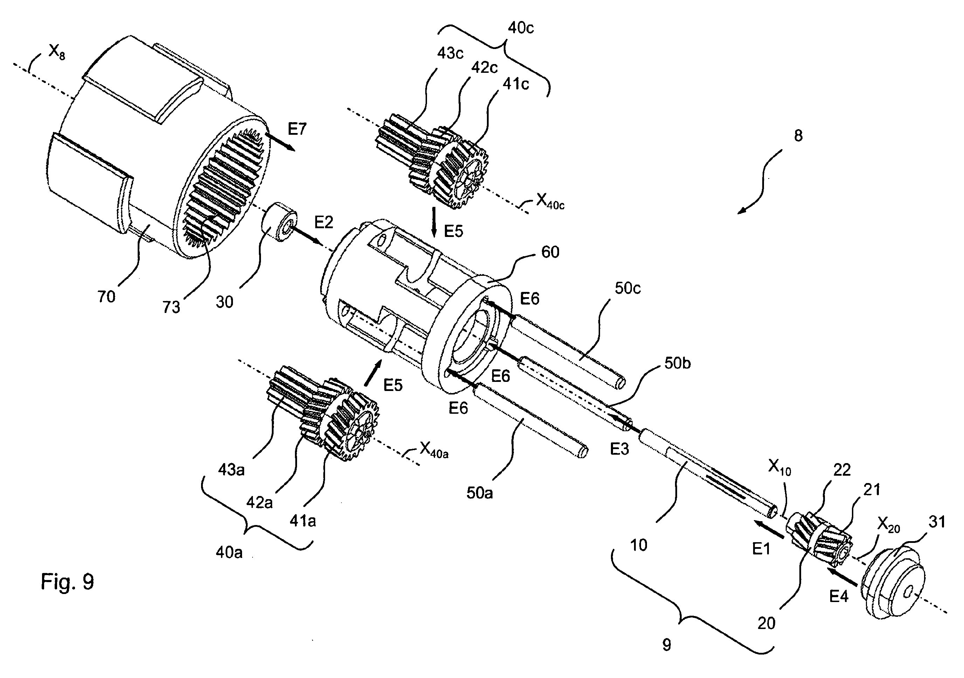

L'assemblage du train planétaire est compréhensible à partir de la figure 9 où les étapes de montage sont représentées par les flèches E1 à E7. Dans une première étape E1, les dentures obliques 21 et 22 formant la pièce 20 sont enchâssées sur l'arbre 10. Dans une deuxième étape E2, le premier palier 30 est mis en place sur le porte-satellites 60. Dans une troisième étape E3, l'arbre 10 équipé des dentures obliques 21 et 22 est inséré dans le porte-satellites 60 et le palier 30. Dans une quatrième étape E4, le deuxième palier 31 est monté sur l'arbre 10 et sur le porte-satellites 60. Dans une cinquième étape E5, les trois satellites 40a, 40b et 40c sont rapportés dans le porte-satellites 60 selon une direction radiale jusqu'à ce que les dentures 41 a, 42a, 41 b, 42b, 41 c et 42c engrènent respectivement avec les dentures 21 et 22. Le satellite 40b n'est pas visible sur la figure 9. Dans une sixième étape E6, les trois arbres 50a, 50b et 50c sont introduits dans le porte-satellites 60 et traversent respectivement, avec du jeu, les trois satellites 40a, 40b et 40c en les maintenant ainsi dans le porte-satellites. Dans une septième étape E7, la couronne 70 est ramenée sur le porte-satellites 60 jusqu'à ce que la denture intérieure 73 engrène avec les dentures droites 43a, 43b et 43c des trois satellites 40a, 40b et 40c.

Ce type de réducteur planétaire est particulièrement adapté pour les actionneurs tubulaires pour stores toiles, stores vénitiens intérieurs ou extérieurs et volets roulants mais pourrait être implanté dans d'autres actionneurs d'écran domotique, comme des actionneurs pour porte de garage ou pour écran de projection.

## Revendications

1. Actionneur (1) d'un écran domotique comprenant un moteur électrique (4) couplé à un réducteur (5) équipé d'au moins un train planétaire (8) comprenant :
- une couronne (70),
- un arbre d'entrée (10) équipé de deux dentures obliques opposées (21, 22) ayant le même angle d'hélice,
- au moins un satellite (40a, 40b, 40c) équipé de deux dentures obliques opposées (41 a, 42a, 41 b, 42b, 41 c, 42c) ayant également le même angle d'hélice et engrenant avec les deux dentures obliques de l'arbre d'entrée,
- un porte-satellites (60) portant le satellite
**caractérisé en ce que** :
- l'une (42a, 42b, 42c) des dentures obliques du satellite est décalée angulairement par rapport à l'autre denture oblique opposée (41 a, 41 b, 41 c) d'un angle fixe (A) dont la valeur est comprise entre 0,25 et 0,75 fois la valeur du pas angulaire (P₁, P₂) des dentures (41 a, 42a, 41 b, 42b, 41 c, 42c), alors que l'une (22) des dentures obliques de l'arbre d'entrée (10) est décalée angulairement, par rapport à l'autre denture oblique-(21) de l'arbre d'entrée, d'un angle fixe (A') ayant la même valeur que l'angle de décalage (A) entre les dentures du satellite (40a, 40b, 40c) et
- le ou chaque satellite (40a, 40b, 40c) comprend en outre une denture extérieure droite (43a, 43b, 43c), solidaire en rotation avec les dentures obliques (41 a, 42a, 41 b, 42b, 41 c, 42c) du satellite et qui engrène avec une denture intérieure droite (73) de la couronne (70).

2. Actionneur selon la revendication 1, **caractérisé en ce que** les dentures obliques (41 a, 42a, 41 b, 42b, 41 c, 42c) et la denture droite (43a, 43b, 43c) du ou de chaque satellite (40a, 40b, 40c) sont ménagées sur une pièce monobloc.

3. Actionneur selon l'une des revendications précédentes **caractérisé en ce que** l'angle de décalage (A, A') des dentures obliques (21, 22, 41 a, 42a, 41 b, 42b, 41 c, 42c) a une valeur égale à 0,5 fois la valeur du pas angulaire de ces dentures.

4. Actionneur selon l'une des revendications précédentes **caractérisé en ce que** le train planétaire (8) comprend au moins trois satellites (40a, 40b, 40c).

5. Actionneur selon l'une des revendications précédentes **caractérisé en ce que** le porte-satellites (60) est couplé avec un arbre de sortie (11) du train planétaire (8).

6. Actionneur selon l'une des revendications précédentes **caractérisé en ce que** la couronne (70) est fixe par rapport à un carter (80) de l'actionneur (1).

7. Actionneur selon l'une des revendications précédentes **caractérisé en ce que** l'actionneur (1) est tubulaire et **en ce que** le moteur électrique (4) est inséré à l'intérieur d'un boîtier tubulaire (3).

8. Installation de fermeture ou de protection solaire (I) comprenant un actionneur (1) selon l'une des revendications précédentes.

## Claims

1. Actuator (1) for a home automation screen, comprising an electric motor (4) coupled to a reduction gear (5) which is equipped with at least one planetary gear train (8), comprising:
- a ring (70);
- an input shaft (10) equipped with two opposite oblique sets of teeth (21, 22) which have the same helix angle;
- at least one satellite (40a, 40b, 40c) equipped with two opposite oblique sets of teeth (41a, 42a, 41b, 42b, 41c, 42c) which also have the same helix angle, and engage with the two oblique sets of teeth of the input shaft;
- a satellite-holder (60) which supports the
satellite,
**characterised in that**:
- one (42a, 42b, 42c) of the oblique sets of teeth of the satellite is offset angularly relative to the other, opposite oblique set of teeth (41a, 41b, 41c) by a fixed angle (A), the value of which is between 0.25 and 0.75 times the value of the angular pitch (P₁, P₂) of the set of teeth (41a, 42a, 41b, 42b, 41c, 42c), whereas one (22) of the oblique sets of teeth of the input shaft (10) is offset angularly relative to the other oblique set of teeth (21) of the input shaft by a fixed angle (A') which has the same value as the angle of offsetting (A) between the sets of teeth of the satellite (40a, 40b, 40c); and
- the or each satellite (40a, 40b, 40c) additionally comprises a straight outer set of teeth (43a, 43b, 43c) which is integral in rotation with the oblique sets of teeth (41a, 42a, 41b, 42b, 41c, 42c) of the satellite, and which engages with a straight inner set of teeth (73) of the ring (70).

2. Actuator according to claim 1, **characterised in that** the oblique sets of teeth (41a, 42a, 41b, 42b, 41c, 42c) and the straight set of teeth (43a, 43b, 43c) of the or each satellite (40a, 40b, 40c) are provided on a part in a single piece.

3. Actuator according to either of the preceding claims, **characterised in that** the angle of offsetting (A, A') of the oblique sets of teeth (21, 22, 41a, 42a, 41b, 42b, 41c, 42c) has a value which is equal to 0.5 times the value of the angular pitch of these sets of teeth.

4. Actuator according to one of the preceding claims, **characterised in that** the planetary gear train (8) comprises at least three satellites (40a, 40b, 40c).

5. Actuator according to one of the preceding claims, **characterised in that** the satellite-holder (60) is coupled to an output shaft (11) of the planetary gear train (8).

6. Actuator according to one of the preceding claims, **characterised in that** the ring (70) is fixed relative to a housing (80) of the actuator (1).

7. Actuator according to one of the preceding claims, **characterised in that** the actuator (1) is tubular, and **in that** the electric motor (4) is inserted in the interior of a tubular case (3).

8. Installation for closure or for protection against the sun (1), comprising an actuator (1) according to one of the preceding claims.

## Patentansprüche

1. Stellglied (1) eines Heimschirms, das einen Elektromotor (4) aufweist, der an ein Getriebe (5) gekoppelt ist, das mit mindestens einem Planetengetriebezug (8) ausgerüstet ist, Folgendes umfassend:
- einen Kranz (70),
- eine Eingangswelle (10), die mit zwei entgegen gesetzten Schrägverzahnungen (21, 22), die den gleichen Schrägungswinkel haben, ausgerüstet ist,
- mindestens ein Planetenrad (40a, 40b, 40c), das mit zwei entgegen gesetzten Schrägverzahnungen (41 a, 42a, 41 b, 42b, 41 c, 42c) ausgerüstet ist, die ebenfalls den gleichen Schrägungswinkel haben und mit den zwei Schrägverzahnungen der Eingangswelle ineinander greifen,
- einen Planetenradträger (60), der das Planetenrad trägt, **dadurch gekennzeichnet, dass**:
- eine (42a, 42b, 42c) der Schrägverzahnungen des Planetenrads winkelig in Bezug zu der anderen entgegen gesetzten Schrägverzahnung (41 a, 41 b, 41 c) um einen gleich bleibenden Winkel (A) versetzt ist, dessen Wert zwischen 0,25 und 0,75 Mal dem Wert des Teilwinkels (P₁, P₂) der Verzahnungen (41 a, 42a, 41 b, 42b, 41 c, 42c) liegt, während die eine (22) der Schrägverzahnungen der Eingangswelle (10) winkelig in Bezug zu der anderen Schrägverzahnung (21) der Eingangswelle um einen gleich bleibenden Winkel (A') versetzt ist, der den gleichen Wert hat wie der Versatzwinkel (A) zwischen den Verzahnungen des Planetenrads (40a, 40b, 40c) und
- das Planetenrad oder jedes Planetenrad (40a, 40b, 40c) ferner eine externe Geradverzahnung (43a, 43b, 43c) aufweist, die in Drehung fest mit den Schrägverzahnungen (41 a, 42a, 41 b, 42b, 41c, 42c) des Planetenrads verbunden ist und in eine innere Geradverzahnung (73) des Kranzes (70) eingreift.

2. Stellglied nach Anspruch 1, **dadurch gekennzeichnet, dass** die Schrägverzahnungen (41 a, 42a, 41 b, 42b, 41 c, 42c) und die Geradverzahnung (43a, 43b, 43c) des einen oder jedes Planetenrads (40a, 40b, 40c) auf einem einteiligen Teil eingerichtet sind.

3. Stellglied nach einem der vorhergehenden Ansprüche, **dadurch gekennzeichnet, dass** der Versatzwinkel (A, A') der Schrägverzahnungen (21, 22, 41 a, 42a, 41 b, 42b, 41 c, 42c) einen Wert gleich 0,5 Mal der Wert des Teilwinkels dieser Verzahnungen hat.

4. Stellglied nach einem der vorhergehenden Ansprüche, **dadurch gekennzeichnet, dass** der Planetengetriebezug (8) mindestens drei Planetenräder (40a, 40b, 40c) aufweist.

5. Stellglied nach einem der vorhergehenden Ansprüche, **dadurch gekennzeichnet, dass** der Planetenradträger (60) mit einer Ausgangswelle (11) des Planetengetriebezugs (8) gekuppelt ist.

6. Stellglied nach einem der vorhergehenden Ansprüche, **dadurch gekennzeichnet, dass** der Kranz (70) in Bezug zu einem Gehäuse (80) des Stellglieds (1) stationär ist.

7. Stellglied nach einem der vorhergehenden Ansprüche, **dadurch gekennzeichnet, dass** das Stellglied (1) röhrenförmig ist, und dass der Elektromotor (4) in das Innere eines röhrenförmigen Gehäuses (3) eingefügt ist.

8. Schließ- /oder Sonnenschutzanlage (I), die ein Stellglied (1) nach einem der vorhergehenden Ansprüche aufweist.
